(19) **Europäisches Patentamt European Patent Office Office européen des brevets**

(11) **EP 2 516 178 B1**

(12) **EUROPEAN PATENT SPECIFICATION**

(45) Date of publication and mention of the grant of the patent:
**16.12.2015 Bulletin 2015/51**

(51) Int Cl.:
***B60C 9/00*** *(2006.01)*      ***D02G 3/48*** *(2006.01)*
***B29D 30/38*** *(2006.01)*

(21) Application number: **10813033.7**

(22) Date of filing: **20.12.2010**

(86) International application number:
**PCT/IB2010/055936**

(87) International publication number:
**WO 2011/077346 (30.06.2011 Gazette 2011/26)**

(54) **METHOD OF INCREASING THE HIGH-SPEED PERFORMANCE OF A CARCASS STRUCTURE IN A TYRE FOR VEHICLE WHEELS AND TYRE FOR VEHICLE WHEELS**

VERFAHREN ZUR STEIGERUNG DER HOCHGESCHWINDIGKEITSLEISTUNG EINER KARKASSENSTRUKTUR BEI EINEM REIFEN FÜR FAHRZEUGRÄDER UND REIFEN FÜR FAHRZEUGRÄDER

PROCÉDÉ PERMETTANT D'AUGMENTER LES PERFORMANCES À VITESSE ÉLEVÉE D'UNE STRUCTURE DE CARCASSE DANS UN PNEU POUR ROUES DE VÉHICULE ET PNEU POUR ROUES DE VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.12.2009 IT MI20092283**
**26.03.2010 US 317904 P**

(43) Date of publication of application:
**31.10.2012 Bulletin 2012/44**

(73) Proprietor: **Pirelli Tyre S.p.A.**
**20126 Milano (IT)**

(72) Inventors:
• **RAMPANA, Barbara**
**I-20126 Milano (IT)**
• **SANGALLI, Roberto**
**I-20126 Milano (IT)**

• **TIRELLI, Diego**
**I-20099 Sesto San Giovanni (Milano) (IT)**

(74) Representative: **Tansini, Elio Fabrizio et al**
**BUGNION S.p.A.**
**Viale Lancetti 17**
**20158 Milano (IT)**

(56) References cited:
**EP-A1- 0 535 969**     **EP-A1- 2 065 220**
**EP-A2- 1 745 945**     **WO-A1-97/06297**
**WO-A1-2009/052844**   **WO-A2-2009/027615**
**DE-A1-102007 025 490**   **US-A- 4 155 394**
**US-A- 5 558 144**

Remarks:
The file contains technical information submitted after the application was filed and not included in this specification

**Description**

The present invention relates to a method of increasing the high-speed performance of a carcass structure in a tyre for vehicle wheels and to a tyre for vehicle wheels.

A tyre for vehicle wheels generally comprises a carcass structure associated with a belt structure. A tread band is applied at a radially external position to the belt structure. The green tyre is built through assembly of respective semifinished products made of an elastomeric compound and is subsequently molded/cured.

In particular, the present invention relates to high-performance tyres that are dedicated to very powerful cars or motorcycles or, more generally, to applications involving high operating speeds and/or hard handling conditions such as, for instance HP (High Performance) tyres and UHP (Ultra High Performance) tyres or tyres used in the sports field, such as track races, or tyres dedicated to SUVs (Sports Utility Vehicles) combining masses and volumes typical of a station wagon with the performance of a sports car.

In these types of tyres, high running speeds of the vehicle, higher than 200 km/h, generate centrifugal forces capable of radially deforming the tyre, radially modifying the outwards outline thereof. This deformation causes a reduction in the footprint area, which adversely modifies the performance and duration of the tyre itself.

In these types of tyres the carcass even during a prolonged operation must ensure dynamic responses resulting in appropriate roadholding, easy drive, handling and comfort in the presence of the high stresses of the thermomechanical type to which the tyre is submitted, in particular in cases of extreme driving.

In the field of tyres for motorvehicles of the HP (high performance) or UHP (ultra high performance) type, one of the most difficult requirements to be met is to limit decay of the roadholding features of the tyre inevitably arising with use of the same under hard handling conditions. In fact, the carcass determines the load capability that can be borne by the tyre, the comfort offered by the tyre and the dynamic behaviour of same. Therefore, for the carcass material well balanced proportions of strength and elasticity under all conditions are required.

In order to limit the tyre deformations at high performance, the carcass ply or plies of known tyres comprise a plurality of reinforcing cords of rayon disposed parallel to each other and at least partly covered with an elastomeric material. In this regard, as reproduced in the meeting proceedings "161st Spring Technical Meeting", April 29th - May 1st 2002, Savannah, Georgia - Rayon the advanced material for rubber reinforcement - ACS Rubber Division by Dr. Christian Norhausen, Condenka GmbH, Germany, it is pointed out that rayon is considered as the material having the best properties in building cords for carcass plies of high-performance tyres. According to the article's authors, in the optimised tyre structures for balance between performance and fatigue strength, rayon is the most reliable material. Still in accordance with the mentioned article, the hot-air-shrinkage values are limited for rayon and aramidic fibres and are relatively high for PEN and Nylon (PA66). As a result of shrinkage, the two last-mentioned materials show a reduction in the Young's modulus of elasticity when temperature increases (i.e., a thermoplastic behaviour) that actually does not suggest use of same in tyres intended for high performance submitted to high operating temperatures.

Document US 2009 0139626 A1 describes a radial tyre including a carcass layer that, in place of the rayon cords, comprises cords of hybrid fibres obtained by imparting a first single twisting to a single yarn of nylon 46 and to two aramidic yarns and subsequently twisting the three yarns together while a second twisting is imparted to the three yarns in a direction opposite to the first twisting operation.

Also known is document WO 2009/052844 in the name of the same Applicant, disclosing a tyre including a structural element provided with a reinforcing element in turn including at least one hybrid yarn. The hybrid yarn comprises a plurality of filaments obtained from a first multi-filament yarn having a first starting modulus and at least one second multi-filament yarn having a second starting modulus different from the first one. Each of the multi-filament yarns comprises a plurality of individual filaments. The individual filaments of the first and second multi-filament yarns are mixed with each other.

EP1745945 discloses a pneumatic tire with a single carcass ply in which the carcass ply comprises at least one composite cord. The composite cord is formed of at least two first yarns twisted helically about at least one second yarn.

EP535969 discloses a pneumatic tyre comprising a carcass comprising at least one carcass ply of hybrid cords comprising a twisted high elasticity filament and low elasticity filament.

US4155394 discloses a cord composite comprising a plurality of plies of individual textile yarns helically cabled together comprised of one to six, preferably one, ply of an aramid yarn and one to twelve, preferably one to two, plies of yarns individually selected from at least one of polyester and nylon.

EP206522O discloses cords of a single material or a hybrid of two or more materials, for example, an aramid yarn wrapped around a polyester or nylon yarn center.

The Applicant has noticed that, during rolling, the friction forces generated between the tyre and the road and the deformations to which the tyre is submitted, generate heat causing heating of the tyre and the elements composing it. The greater the accelerations to which the tyre is submitted, the more important the phenomenon is.

The Applicant has found that heating of the above mentioned known reinforcing cords belonging to the carcass structure determines a reduction in the modulus of the yarns forming the cords and a consequent increase in the true deformations of the carcass submitted to accelerations relative to the ideal deformations at a reference temperature (the room temperature of about 20°C, for example).

In addition, the Applicant has observed that, since rayon is strongly hygroscopic, i.e. has a modulus greatly depending on the humidity rate of the fibre, and since during working of the fibre the drying process is complicated and can be hardly obtained in an optimal manner (a certain amount of moisture at all events remains entrapped in the fibre), the wet rayon yarn that is incorporated into the tyre carcass has a smaller modulus than that theoretically provided, which results in an increase in the true deformations of the carcass relative to the ideal ones with a fully dry fibre.

In addition, since the mechanical features of rayon depend on the humidity content in the fibre (which is variable and depends on the efficiency of the drying system), the rayon performances on the tyre will be provided with greater difficulty. Furthermore, the water remaining entrapped in the rayon fibre can cause faults on the finished tyre (bubbles, detachments, etc.)

In this context, the Applicant has felt the necessity to make a yarn adapted to make reinforcing cords for carcass plies having a sufficiently high and stable modulus even in the presence of variations in temperature during use of the tyre on the road, and humidity during working of the tyre components.

According to the present invention, it has been surprisingly found that, manufacturing the carcass with hybrid yarns comprising mixed filaments respectively belonging to a polyester yarn and a yarn provided with a low decay of the modulus depending on temperature, it is possible to increase the carcass performance in terms of dynamic behaviour to high operating temperatures. This aim is achieved by mixing the filaments of the polyester yarn in a percentage at least as high as 50% with an amount of filaments of the yarn having a low decay on increasing of the temperature, in a percentage not exceeding 50%.

More specifically, in a first aspect, the present invention relates to a method of increasing the high-speed performance of a carcass structure in a tyre for vehicle wheels as defined in claim 1, said method including:

-    preparing at least one hybrid yarn comprising a plurality of filaments obtained from a first multi-filament yarn of polyester and a second multi-filament yarn having a decay of the modulus with the temperature, measured between 20°C and 100°C, lower than 20%; each of said first multi-filament yarn and second multi-filament yarn comprising a plurality of individual filaments; the individual filaments of said first multi-filament yarn being at least partly mixed in proportions of at least 50% with the individual filaments of said second multi-filament yarn;

-    assembling a carcass structure comprising at least one carcass ply substantially built on cords comprising said at least one hybrid yarn.

In accordance with a second aspect, the present invention relates to a tyre for vehicle wheels as defined in claim 12, the tyre comprising:

    a carcass structure, a belt structure applied at a radially external position to the carcass structure, a tread band applied at a radially external position to said belt structure at a crown region;
    wherein the carcass structure comprises at least one carcass ply;
    wherein said at least one carcass ply comprises a plurality of reinforcing cords disposed parallel to each other and at least partly covered with an elastomeric composition, at least some of said reinforcing cords including at least one hybrid yarn; wherein the hybrid yarn comprises a plurality of filaments obtained from a first multi-filament yarn of polyester and from a second multi-filament yarn having a decay of the modulus with the temperature, measured between 20°C and 100°C, lower than 20%; each of said first multi-filament yarn and second multi-filament yarn comprising a plurality of individual filaments; the individual filaments of said first multi-filament yarn being at least partly mixed in proportions of at least 50% with the individual filaments of said second multi-filament yarn. Preferred embodiments of the invention are defined in the dependent claims.

Preferably, said tyre is a high-performance tyre.

In particular, the Applicant's experiences show that ennobling of an inexpensive yarn that by itself is unsuitable for use in the carcass cords of high-performance tyres due to the high decrease of the modulus with the operating temperature, such as the polyester (PET polyethylene terephthalate, PEN polyethylene naphthalate) yarns, by mixing it with an even low percentage of filaments of a material of low sensitiveness to temperature variations, such as aramide (aromatic polyamides) fibre or carbon fibre or glass fibre, allows a hybrid yarn to be obtained which has the desired features (modulus value and performance homogeneity) capable of meeting the specifications of the high-performance tyre carcasses.

The present invention, in at least one of the above aspects, can have one or more of the preferred features hereinafter described.

Preferably, the first multi-filament yarn is made of fibres selected from the group: polyethylene terephthalate (PET), polyethylene naphthalate (PEN).

Preferably, the first multi-filament yarn has a decay of the modulus with the temperature, measured between 20°C and 100°C and at a 2% elongation, higher than about 40%.

Preferably, the second multi-filament yarn is made of fibres selected from the group comprising: aramide fibres, glass fibres, carbon fibres.

An advantage in use of PET is the low cost. An advantage in use of PEN is the sufficiently high modulus at room temperature. The polyesters and in particular the PET are normally used for making reinforcing cords in carcasses of not high-performance tyres. Mixing of aramide fibres or glass fibres or carbon fibres with a polyester enables a hybrid to be obtained which is provided with a modulus which is substantially stable with the temperature, of relatively low hygroscopicity, sufficiently lightweight and relatively cheap. The low decay of the modulus of the hybrid yarn with the temperature ensures greater stability of the tyre profile to high temperatures. The obtained hybrid (fibre with high decay of the modulus with the temperature with fibre with limited decay of the modulus) needs a less expensive and more reliable drying process than the drying process used for rayon. Possible faults on the finished tyre, due to the rayon hygroscopicity, are reduced. In addition, the tyres have more uniform performance features.

Preferably, the hybrid yarn comprises about 50% by weight to about 90% by weight of the first multi-filament yarn.

Preferably, the hybrid yarn comprises about 10% by weight to about 50% by weight of the second multi-filament yarn.

The lower percentage of the less valuable, i.e. cheaper, yarn allows the tyre production costs to be limited while maintaining or improving the performance of same.

Preferably, the hybrid yarn has a starting modulus at 20°C greater than about 1500 cN/Tex.

Preferably, the hybrid yarn has a starting modulus at 20°C greater than about 2000 cN/Tex.

Preferably, the hybrid yarn has a starting modulus at 20°C greater than about 2500 cN/Tex.

Preferably, the hybrid yarn has a shrinkage, measured at 177°C, less than or equal to 4%.

The material, quality and percentage variations in the two types of yarns allow the desired performance of the hybrid yarn (modulus, shrinkage) and the carcass to be obtained for a given tyre.

In accordance with a preferred embodiment the hybrid yarn is prepared by:

- feeding the first multi-filament yarn to an air-jet device at a first feeding speed;
- feeding the second multi-filament yarn to the air-jet device at a second feeding speed;

wherein the first feeding speed and second feeding speed are substantially identical.

The air-jet device is known by itself and is not further described. Feeding of the two yarns at the same speed enables a hybrid yarn to be obtained in which the two mixed filament types composing it work in a synergistic manner since the beginning of elongation.

Further features and advantages will become more apparent from the detailed description of a preferred but not exclusive embodiment of a method of increasing the high-speed performance of a carcass structure in a tyre for vehicle wheels and a tyre for vehicle wheels according to the present invention.

This description will be set out hereinafter with reference to the accompanying drawings, given by way of non-limiting example in which:

- Fig. 1 diagrammatically shows a radial half-section of a tyre for vehicle wheels;
- Fig. 2 is a perspective view of an elongated element designed to form the strip-like elements of the carcass ply of the tyre of Fig. 1;
- Fig. 3 shows a production step of a hybrid yarn, starting from two multi-filament yarns used in making the elongated element of Fig. 2;
- Fig. 4a shows a cross-section of the two multi-filament yarns of Fig. 3;
- Fig. 4b shows a cross-section of the hybrid yarn of Fig. 3;
- Fig. 5 is a Load/Deformation graph illustrating two curves of the same yarn at different temperatures;
- Fig. 6 is a Modulus/Temperature graph illustrating curves relating to different yarns;
- Fig. 7 is a Load/Deformation graph illustrating curves relating to different cords.

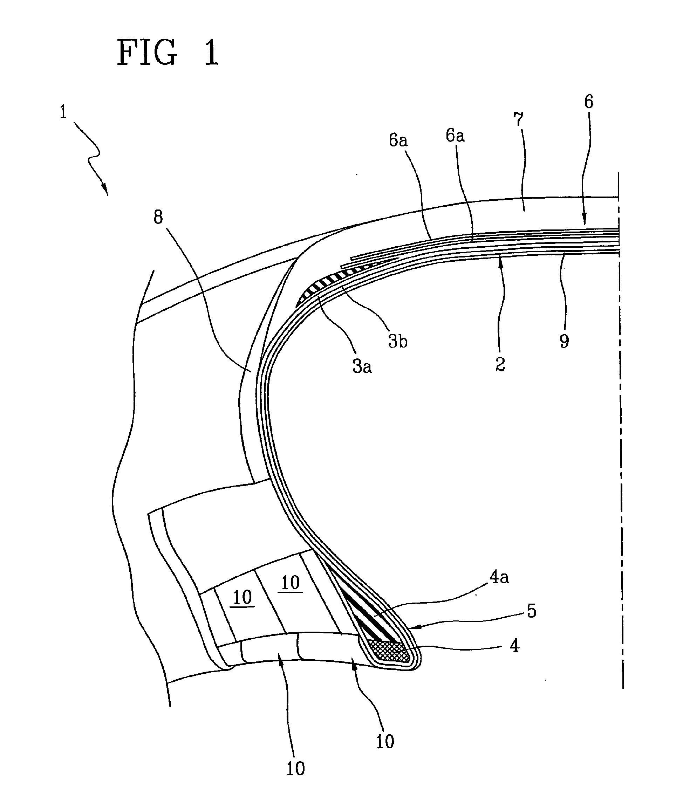

Identified by reference numeral 1 in Fig. 1 is a tyre for vehicle wheels generally comprising a carcass structure 2 including at least one carcass ply 3a, 3b (two in the example shown in Fig. 1) having respectively opposite end flaps in engagement with respective annular anchoring structures 4, possibly associated with elastomeric fillers 4a, integrated into the regions 5 usually identified as "beads".

Associated with the carcass structure 2 is a belt structure 6 comprising one or more belt layers 6a placed in radial superposed relationship with each other and with the carcass plies 3a, 3b and having typically metallic reinforcing cords. These reinforcing cords can have a crossed orientation relative to the circumferential extension direction of tyre 1.

A tread band 7 of elastomeric material like other semifinished products constituting the tyre is applied at a radially external position to the belt structure 6.

In addition, at an axially external position, respective sidewalls 8 of elastomeric compound are applied to the side surfaces of the carcass structure 2, each extending from one of the side edges of the tread band 7 until close to the respective annular anchoring structure to the beads 5.

Furthermore, a radially internal surface of tyre 1 is preferably internally coated with a layer of substantially air-tight elastomeric material, or a so-called liner 9.

In the embodiment shown in Fig. 1, tyre 1 is of the type for motor-vehicles.

Typically, in this case the belt structure 6 further comprises at least one radially external layer including textile cords disposed at a substantially zero angle relative to the circumferential extension direction of the tyre.

Preferably, tyre 1 for motor-vehicles is of the HP (High Performance) or UHP (Ultra High Performance) type, that is a tyre capable of withstanding maximum speeds of at least 240 km/h, preferably higher than 270 km/h. Examples of these tyres are those belonging to classes "V", "W", "Y", "Z" or "ZR".

In accordance with further embodiments of the present invention, tyre 1 is for motorcycles. The cross-section profile of the tyre for motorcycles (not shown) has a high transverse curvature because it must ensure a sufficient footprint area in all inclination conditions of the motorcycle. The transverse curvature is defined by the value of the ratio between the distance f of the tread centre from the line passing through the laterally opposite ends of said tread, measured in the equatorial plane of the tyre, and the width C defined by the distance between the laterally opposite ends of the tread itself. By "high-transverse-curvature tyre" it is intended a tyre the transverse curvature ratio of which (f/C) is at least 0.20. Preferably (f/C) is included between 0.20 and 0.5 for a rear tyre and 0.35 and 0.6 for a front tyre, respectively.

Building of tyre 1 as above described is carried out through assembly of respective semifinished products on a forming drum, not shown, by at least one assembling device.

At least part of the components designed to form the carcass structure 2 of tyre 1 is built and/or assembled on the forming drum. In greater detail, the forming drum is adapted to first receive liner 9, if any, and subsequently the carcass plies 3a, 3b. Subsequently, devices not shown coaxially engage one of the annular anchoring structures 4 around each of the end flaps, position an outer sleeve comprising the belt structure 6 and tread band 7 at a coaxially centred position around the cylindrical carcass sleeve and shape the carcass sleeve into a toroidal configuration through radial expansion of the carcass plies 3a, 3b so as to determine application of the latter against a radially internal surface of the outer sleeve.

After building of the green tyre 1, a curing and molding treatment is carried out which aims at determining the structural stabilisation of tyre 1 through cross-linking of the elastomeric compounds as well as impressing the tread band 7 with a desired tread pattern and stamping possible distinctive graphic marks at the sidewalls 8. During curing, among the elastomer macromolecules a lattice of covalent bonds is generated that, depending on its intensity, prevents flowing of the elastomer making the material increasingly more insoluble, infusible and elastic.

The carcass plies 3a, 3b can be each made by a laying unit designed to apply a plurality of strip-like elements 10 in a circumferentially mutually approached relationship on a deposition surface radially external to the forming drum, in such a manner as to form each ply layer having a continuous circumferential extension around the geometric axis of said forming drum.

The strip-like elements 10 are obtained by cutting operations sequentially carried out on at least one continuous elongated or ribbon-like element 11 coming from a drawing and/or calendering device or from a feeding reel, and therefore all of them have the same width.

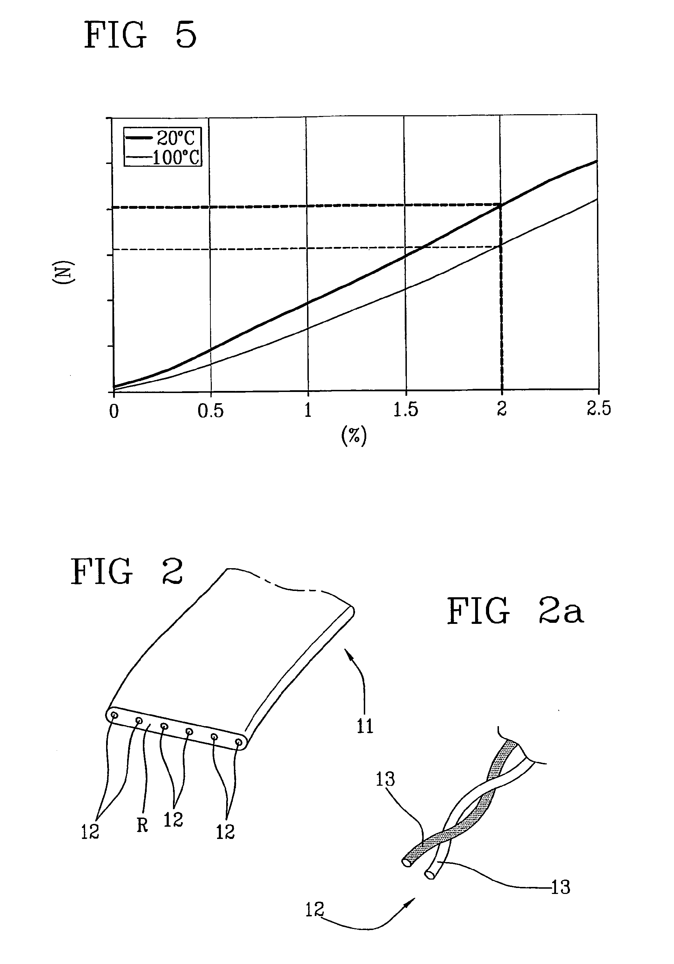

As shown in Fig. 2, the continuous ribbon-like element 11 and consequently the strip-like elements 10 obtained therefrom, each have a plurality of cords 12 or similar thread elements extending parallel to each other along the longitudinal extension of the ribbon-like element and the strip-like element 10 itself, and at least partly coated with a layer of elastomeric material "R" applied through the above mentioned drawing and/or calendering operation.

In accordance with embodiments not shown, each carcass ply can be made as a single semifinished product comprising the cords 12 coated with the layer of elastomeric material "R".

Typically, the elastomeric material comprises elastomeric polymers in addition to additives such as fillers (carbon black, silica), curing agents (sulphur, for example), activators, accelerants, plasticizers, that are particularly adapted for tyre production.

Typically, the elastomeric material comprises a cross-linkable elastomeric composition including elastomeric polymers or copolymers with an unsaturated chain having a glass transition temperature (Tg) generally under 20°C, preferably in the range of 0°C to 110°C. These polymers or copolymers can be of natural origin or be obtained through solution polymerisation, emulsion polymerisation or gas-phase polymerisation of one or more conjugates diolefins, optionally mixed with at least one comonomer selected from monovinylarens and/or polar comonomers in an amount not exceeding 60% by weight. The conjugates diolefins generally contain 4 to 12, preferably 4 to 8 carbon atoms and can be selected for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene or mixtures thereof. 1,3-butadiene or isoprene are particularly preferred.

The polar comonomers that possibly can be used can be for example selected from vinylpiridine, vinylquinoline, acrylic acid and alkylacrylic acid esters, nitriles or mixtures thereof such as methyl acrylate, ethyl acrylate, methyl metacrylate, ethyl metacrylate, acrylonitrile or mixtures thereof.

Preferably, the synthetic or natural elastomer included in the elastomeric material can be for example selected from: cis-1,4-polyisoprene (natural or synthetic rubber, preferably natural rubber), 3,4-polyisoprene, polybutadiene (in particular polybutadiene with a high 1,4-cis content), possibly halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers or mixtures thereof.

Advantageously, in order to improve adhesion of said hybrid fibres to the cross-linkable elastomeric material, the hybrid filaments can be surface treated by dipping them into a bath containing a solution of a mixture of resorcinol resin/formaldehyde sticky latex (commonly known as "resorcinol-formaldehyde latex - RFL").

The latex used can be for example selected from: vinylpyridine/styrene-butadiene (VP/SBR), styrenebutadiene (SBR), latex of isoprene rubber (NR), carboxylic hydrogenated butadiene-acrylonitrile (X-HNBR), hydrogenated acrylonitrile butadiene (HNBR), acrylonitrile butadiene (NBR), ethylenepropylene-diene monomer (EPDM), chloro sulfonyl polyethylene (CSM), alone or mixtures of same.

Each cord 12 comprises a single twisted hybrid yarn 13 or at least two yarns 13 twisted together (Fig. 2a), at least one of which is hybrid.

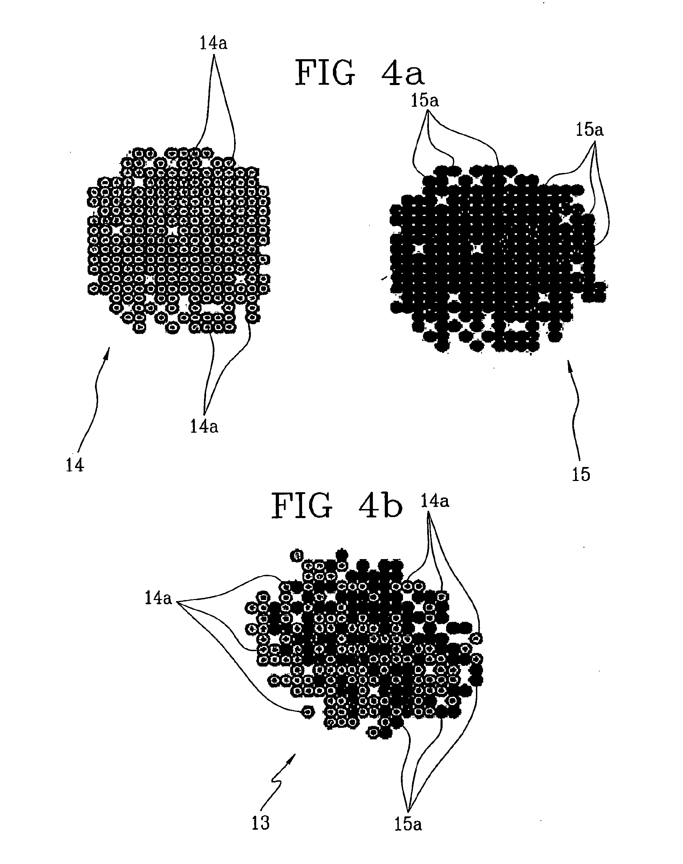

The hybrid yarn 13 is formed with a plurality of individual filaments 14a, 15a of two different materials (Fig. 4b) mixed or mingled together.

The hybrid yarn 13 is obtained starting from a first multi-filament yarn 14 and a second multi-filament yarn 15, each made up of a single material, or comprising a plurality of filaments or filaments of a single material. The first multi-filament yarn 14 is formed with a plurality of filaments or filaments 14a of a first material (Fig. 4a). The second multi-filament yarn 15 is formed with a plurality of filaments 15a of a second material (Fig. 4a).

The filaments of the first and second materials are mixed by an operation known as "commingling" and described in document WO 2009/052844 in the name of the same Applicant.

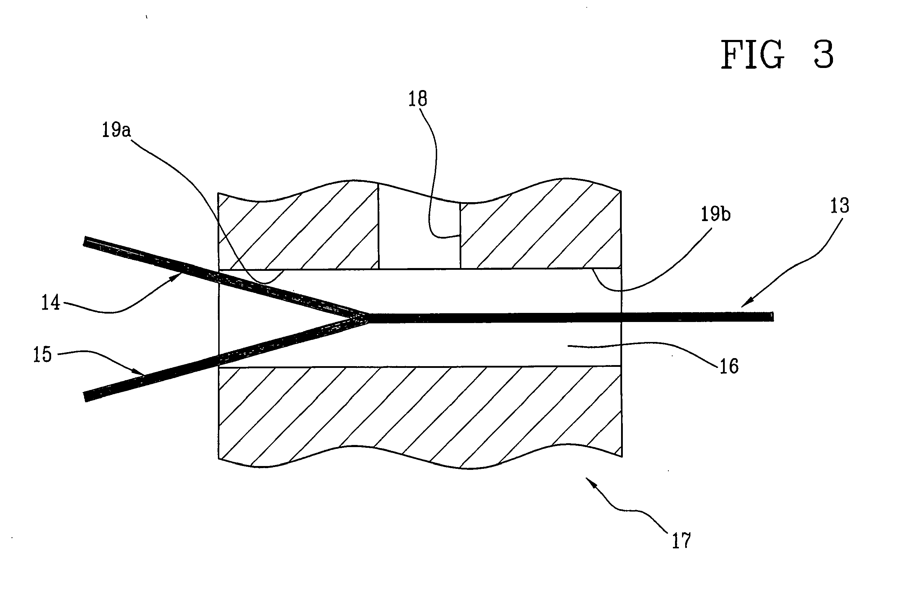

The first multi-filament yarn 14 and second multi-filament yarn 15 are conveyed and disposed in mutual side by side relationship within a through duct 16 of an air-jet device 17, diagrammatically shown in Fig. 3. Air under pressure is introduced into said duct 16 through one or more nozzles 18. The air separates the individual filaments of each of the first and second multi-filament yarns 14, 15 and mixes them together forming a single hybrid yarn 13. The two multi-filament yarns 14, 15 enter the through duct 16 of the air-jet device 17 through an entry 19a and the hybrid yarn comes out through an exit 19b of said through duct 16. The air-jet device can be selected from known devices such as an air-jet texturising device, air-jet braiding device, air-jet entangling device.

Within the present specification and the appended claims, being identified as "CS1" and "CS2" the linear feeding speeds of the first and second multi-filament yarns 14, 15 to the air-jet device 17 and "TS" the linear picking-up speed of the hybrid yarn 13 from the air-jet device 17, the "over deliveries" (OD1%, OD2%) of the first and second multi-filament yarns 14, 15 respectively are defined by the following formulas:

$$(OD1\%) = [(CS1-TS)/TS] \times 100$$

$$(OD2\%) = [(CS2-TS)/TS] \times 100.$$

The "over deliveries" are the percent difference between the linear feeding speed of the first or second multi-filament yarn 14, 15 and the picking-up speed of the hybrid yarn 13.

Preferably, the "over delivery" (OD1%) of the first multi-filament yarn 14 is included between about 1 and about 20. Preferably, the "over delivery" (OD2%) of the second multi-filament yarn 15 is included between about 1 and about 20.

In addition, preferably, the "over delivery" (OD1%) of the first multi-filament yarn 14 is substantially equal to the "over delivery " (OD2%) of the second multi-filament yarn 15, i.e. the feeding speeds "CS1" and "CS2" are substantially the same. In particular, the absolute-value difference between the feeding speed "CS1" of the first multi-filament yarn 14 and the feeding speed "CS2" of the second multi-filament yarn 14 calculated in percentage relative to the arithmetic mean of the two speeds "CS1" and "CS2" ((|CS1-CS2|/((CS1+CS2)/2))x100) is lower than 1%, preferably lower than 0.5%.

The modulus of a cord or a yarn is the traction modulus measured in cN/tex, i.e. a force (centiNewton) related to the linear density (tex) of the fibres.

The expression "decay of the modulus with the temperature" in the present specification and in the appended claims means the reduction of the traction modulus of a cord or a yarn as the temperature increases.

In particular, for evaluating the stability of the modulus in a hot state first the analyses of the cord tractions carried out at room temperature (20°C) and in a hot condition (generally 60°C or 70°C and 100°C) is accomplished. The analysed temperature values are characteristic of the tyre temperatures in operation.

In the graph in Fig. 5 it is shown, by way of example, the load-elongation traction curve of a material at 20°C and 100°C. As the temperature increases the traction curve becomes lower, which means that under the same deformation the load is smaller.

The term "LASE" means "Load at Specified Elongation", "LASE2%" is therefore the load relating to a 2% deformation (in the ASTM D855 specification "LASE" is named "FASE", i.e. "Force At Specified Elongation"). "LASE2%" measured at 100°C is smaller than "LASE2%" measured at 20°C due to the reduction in stiffness as the temperature increases.

The mean modulus (Mm) of a material calculated between a 0% and 2% deformation is defined as:

$$\text{Mm = LASE2\% / (Delta Def * A)}$$

wherein:

Delta Def = 2, i.e. the elongation difference between 2% and 0%;
A = cord section.

Therefore:

$$\cdot \ \text{Mm(20°C) = LASE2\% (20°C) / (2*A)}$$

$$\cdot \ \text{Mm(100°C) = LASE2\% (100°C) / (2*A)}$$

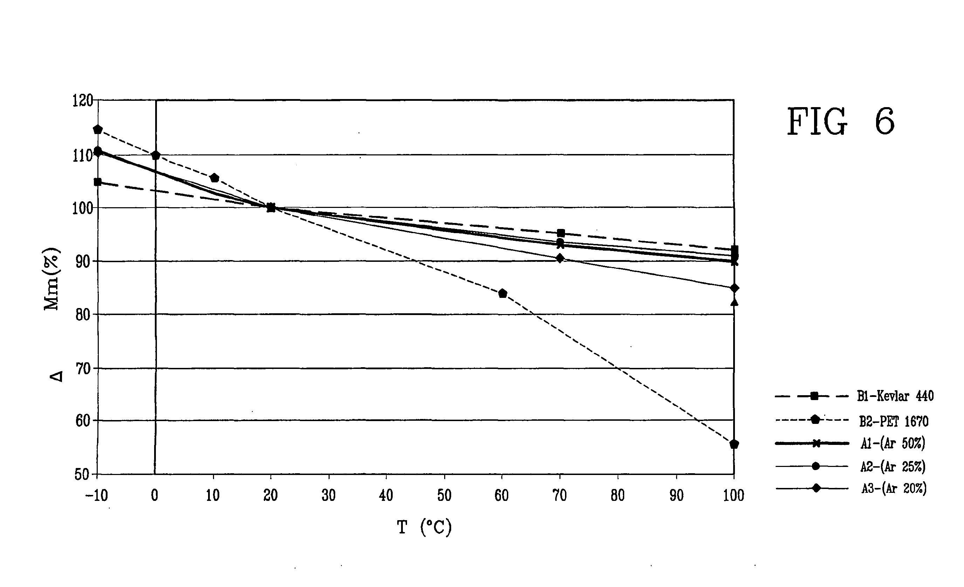

The "decay of the modulus with the temperature" can be displayed, for example (Fig. 6, commented upon in the example below) through the graphic representation of the percent mean modulus (at 2% elongation) as a function of the temperature (Mm[%](T)) in a temperature range of -10°C to 100°C.

The percent mean modulus (Mm[%](T) is defined as the ratio between the mean modulus at a temperature T (Mn(T)) and the mean modulus at 20°C (Mm(20°C)) multiplied by 100.

$$\cdot \ \text{Mm[\%](T)) = ((Mm(T))/(Mm(20°C))x100}$$

As a result, the percent mean modulus at 20°C · Mm[%](20°C)) is equal to 100.

The percent mean modulus at 100°C is:

$$\cdot \ \text{Mm[\%](100°C)) = ((Mm(100°))/(Mm(20°C))x100 =}$$
$$\text{((LASE2\% (100°C)) / (LASE2\% (20°C))) x 100.}$$

The decay of the mean modulus at a 2% elongation with the temperature increase from 20°C to 100°C can be represented in percent as follows:

$$\cdot \ \text{(}\Delta_{(20°C-100°C)}\text{Mm[\%])=100x(1-((LASE2\% (100°C)) / (LASE2\%}$$
$$\text{(20°C))))}$$

By the term "starting modulus" in the present specification and the appended claims it is intended the traction modulus of a cord or a yarn calculated in the starting step of deformation, i.e. with a substantially zero deformation. In a force/deformation graph, the starting modulus is the tangent to the curve at the zero-deformation point.

The first multi-filament yarn 14 is preferably made up of filaments of polyester fibres (such as polyethylene terephthalate (PET), polyethylene naphthalate (PEN)), having a high decay of the mean modulus with the temperature and, preferably, a low starting modulus.

By "high decay of the mean modulus with the temperature" it is intended a decay greater than about 40%, measured according to the criterion set out above:

$$\bullet \quad (\Delta_{(20°C-100°C)}Mm[\%])_{first\ yarn} > 40.$$

By low starting modulus it is intended a modulus lower than about 1000 cN/tex.

The first multi-filament yarn 14 preferably has a number of filaments included between about 100 and about 1000.

The first multi-filament yarn 14 preferably has a linear density included between about 200 dtex and about 4000 dtex.

Each of said filaments of the first multi-filament yarn 14 preferably has a diameter included between about 5 $\mu$m and about 100 $\mu$m.

The second multi-filament yarn 15 is preferably made up of fibre filaments having a low decay of the mean modulus with the temperature and preferably a high starting modulus.

Preferably, these fibres referred to as fibres with high modulus stability are aramidic fibres, carbon fibres, glass fibres.

By "low decay of the mean modulus with the temperature" it is intended a decay smaller than about 20%, preferably smaller than about 15% measured according to the above criterion:

$$\bullet \quad (\Delta_{(20°C-100°C)}Mm[\%])_{first\ yarn} < 20.$$

$$\bullet \quad (\Delta_{(20°C-100°C)}Mm[\%])_{second\ yarn} < 15.$$

By "high starting modulus" it is intended a modulus greater than about 3000 cN/tex.

The second multi-filament yarn 15 preferably has a number of filaments included between about 100 and about 1000.

The second multi-filament yarn 15 preferably has a linear density included between about 200 dtex and about 4000 dtex.

Each of said filaments of the second multi-filament yarn 15 preferably has a diameter included between about 5 $\mu$m and about 100 $\mu$m.

According to another aspect of the invention, the Applicant has found that it is possible to vary the temperature performance of the carcass by combining different linear densities (counts) of the yarns with different yarn numbers per cord and different twisting levels.

Obviously, a person skilled in the art will be able, to the aims of the present invention, to select yarn number and count, twisting and density degree between the above variables, so as to build a tyre carcass enabling the described increase in thermal stability in relation to the vehicle's performance to be achieved.

The obtained hybrid yarn 13 preferably comprises about 50% by weight to about 90% by weight of the first multi-filament yarn and, preferably, about 10% by weight to about 50% by weight of the second multi-filament yarn.

The obtained hybrid yarn 13 preferably has a starting modulus preferably higher than about 1500 cN/tex, more preferably higher than about 2000 cN/tex.

The obtained hybrid yarn 13 preferably has a shrinkage measured at 177°C according to ASTM Standard D2259-02(2004) smaller than or equal to 4%.

EXAMPLE 1

Three hybrid yarns in accordance with the present invention have been prepared:

A1 - AR+PET (AR 50%)
A2 - AR+PET (AR 25%)
A3 - AR+PET (AR 20%)
and two non-hybrid yarns:

B1 - Kevlar 440
B2 - PET 1670

A1 is a hybrid yarn made starting from a multi-filament yarn of aramide (AR) and from a multi-filament yarn of polyethylene terephthalate (PET); the multi-filament yarn of aramide (AR) constitutes 50% by weight of the hybrid yarn A1.

Yarn A1 was prepared by feeding the multi-filament yarn of aramide (AR) and the multi-filament yarn of polyethylene terephthalate (PET) to an air-jet texturising device.

A2 is a hybrid yarn made starting from a multi-filament yarn of aramide (AR) and from a multi-filament yarn of polyethylene terephthalate (PET); the multi-filament yarn of aramide (AR) constitutes 25% by weight of the hybrid yarn A2. Yarn A2 was prepared by feeding the multi-filament yarn of aramide (AR) and the multi-filament yarn of polyethylene terephthalate (PET) to an air-jet texturising device.

A3 is a hybrid yarn made starting from a multi-filament yarn of aramide (AR) and from a multi-filament yarn of polyethylene terephthalate (PET); the multi-filament yarn of aramide (AR) constitutes 20% by weight of the hybrid yarn A3. Yarn A3 was prepared by feeding the multi-filament yarn of aramide (AR) and the multi-filament yarn of polyethylene terephthalate (PET) to an air-jet texturising device.

B1 is a non-hybrid comparison yarn and consists of a multi-filament yarn of aramide (Kevlar®); 440 is the count (in dtex) of this multi-filament yarn of aramide.

B2 is a non-hybrid comparison yarn and consists of a multi-filament yarn of PET; 1670 is the count (in dtex) of this multi-filament yarn of PET.

Fig. 6 shows the percent mean modulus (at a 2% elongation) as a function of the temperature (Mm[%](T)) in a temperature range of -10°C to 100°C for each of the above mentioned yarns. The desired behaviour for ensuring better performance on the tyre is that of having the modulus independent of the temperature (no decay of the modulus).

Fig. 6 shows that the three hybrid yarns A1, A2 and A3 according to the invention have a thermal stability quite higher than PET and close to that of the aramide yarn alone (B1).

In particular, the thermal stability of the hybrid yarns A1 and A2 is substantially equal to that of the yarn made of aramide alone (B1).

EXAMPLE 2

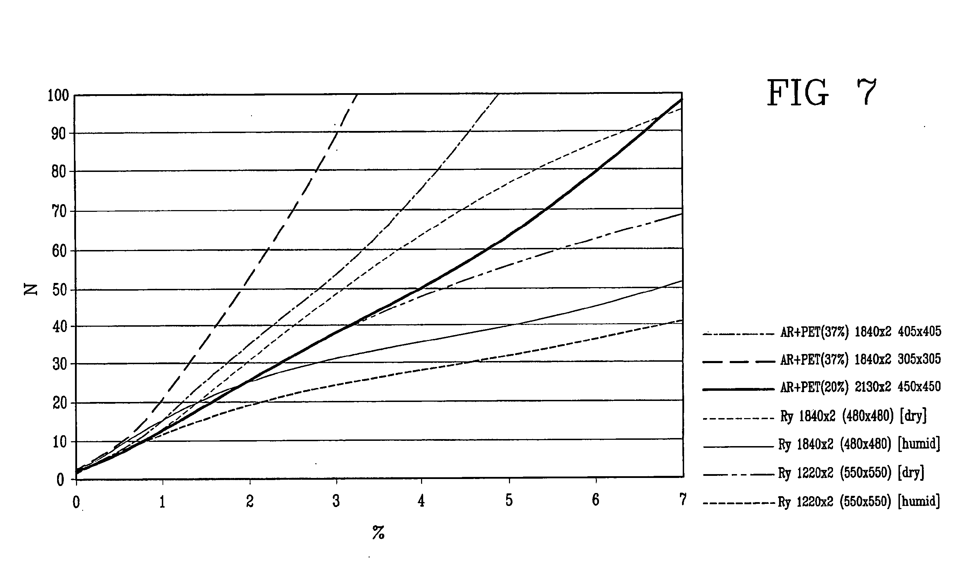

Fig. 7 shows the traction load (in Newton) as a function of the elongation (in %) for each of the three cords according to the invention:

AR+PET (37%) 1840x2 405x405 (cord formed with two hybrid yarns AR+PET (37%), each with count 1840 (dtex) and 405 twisting operations per metre);
AR+PET(37%) 1840x2 305x305 (cord formed with two hybrid yarns AR+PET (37%), each with count 1840 (dtex) and 305 twisting operations per metre);
AR+PET (20%) 2130x2 450x450 (cord formed with two hybrid yarns AR+PET (37%), each with count 2130 (dtex) and 450 twisting operations per metre); and for four cords of Rayon:

· Ry 1840x2 (480x480) [dry] (cord formed with two rayon yarns, each with count 1840 (dtex) and 480 twisting operations per metre; traction test carried out with dry fibre (dried in a stove at 105°C for at least two hours);
· Ry 1840x2 (480x480) [humid] (cord identical with the preceding one but traction test carried out with humid fibre;
· Ry 1220x2 (550x550) [dry] (cord formed with two rayon yarns, each with count 1220 (dtex) and 550 twisting operations per metre; traction test carried out with dry fibre (dried in a stove at 105°C for at least two hours);
· Ry 1220x2 (550x550) [humid] (cord identical with the preceding one but traction test carried out with humid fibre).

The hybrid cords according to the invention were tested in an environment with 65% humidity.

Fig. 7 shows that the humid cords of rayon have mechanical features (modulus) greatly worse than the same cords of rayon when dry and above all the three cords with hybrid yarns according to the invention have a starting modulus higher than that of the rayon cords both dry and humid.

In this regard, in the following table it is reproduced the amount of humidity contained in the two rayon cords compared with the AR+PET(20%) 2130x2 450x450 cord, measured in an environment with a temperature of 22°C and humidity of 65%.

Under balance conditions, the humidity content of rayon is about 12% while that of the AR+PET is lower than 2%, which means that rayon is very hygroscopic while the hybrid yarn according to the invention AR+PET is scarcely hygroscopic.

If the humidity recovery in time starting from a perfectly dried material is observed, it is possible to see that the process is relatively quick and therefore critical during the production process.

|  | Ry 1840X2 (480x480) | Ry 1220x2 (550x550) | Ar+PET 2130x2 (450x450) |
|---|---|---|---|
| Total humidity after 24 h (%) | 12.0 | 11.5 | 1.7 |
| Humidity after 5 min (%) | 2.3 | 2.8 | 0.3 |
| Humidity after 10 min (%) | 3.6 | 4.6 | 0.4 |
| Humidity after 20 min (%) | 5.2 | 6.0 | 0.5 |

**Claims**

1. A method of increasing the high-speed performance of a carcass structure in a tyre for vehicle wheels, said method including:

   - preparing at least one hybrid yarn (13) comprising a plurality of filaments (14a, 15a) obtained from a first multi-filament yarn (14) of polyester and a second multi-filament yarn (15) having a decay of the modulus with the temperature, measured between 20°C and 100°C, lower than 20%; each of said first multi-filament yarn (14) and second multi-filament yarn (15) comprising a plurality of individual filaments (14a, 15a); the individual filaments (14a) of said first multi-filament yarn (14) being at least partly mixed in proportions of at least 50% with the individual filaments (15a) of said second multi-filament yarn (15);
   - assembling a carcass structure (2) comprising at least one carcass ply (3a, 3b) substantially built on cords (12) comprising said at least one hybrid yarn (13).

2. A method as claimed in claim 1, wherein the first multi-filament yarn (14) is made of fibres selected from the group: polyethylene terephthalate (PET), polyethylene naphthalate (PEN).

3. A method as claimed in anyone of the preceding claims, wherein the first multi-filament yarn (14) has a decay of the modulus with the temperature, measured between 20°C and 100°C and at a 2% elongation, higher than about 40%.

4. A method as claimed in anyone of the preceding claims, wherein the second multi-filament yarn (15) is made of fibres selected from the group comprising: aramide fibres, glass fibres, carbon fibres.

5. A method as claimed in anyone of the preceding claims, wherein the hybrid yarn (13) comprises about 50% by weight to about 90% by weight of the first multi-filament yarn.

6. A method as claimed in anyone of the preceding claims, wherein the hybrid yarn (13) comprises about 10% by weight to about 50% by weight of the second multi-filament yarn.

7. A method as claimed in anyone of the preceding claims, wherein the hybrid yarn (13) has a starting modulus at 20°C greater than about 1500 cN/Tex.

8. A method as claimed in anyone of the preceding claims, wherein the hybrid yarn (13) has a starting modulus at 20°C greater than about 2000 cN/Tex.

9. A method as claimed in anyone of the preceding claims, wherein the hybrid yarn (13) has a starting modulus at 20°C greater than about 2500 cN/Tex.

10. A method as claimed in anyone of the preceding claims, wherein the hybrid yarn (13) has a shrinkage, measured at 177°C, less than or equal to 4%.

11. A method as claimed in anyone of the preceding claims, wherein the hybrid yarn (13) is prepared by:

    - feeding the first multi-filament yarn (14) to an air-jet device (17) at a first feeding speed (CS1);
    - feeding the second multi-filament yarn (15) to the air-jet device (17) at a second feeding speed (CS2);
    wherein the first feeding speed (CS1) and second feeding speed (CS2) are substantially identical.

**12.** A tyre for vehicle wheels, comprising:

a carcass structure (2), a belt structure (6) applied at a radially external position to the carcass structure (2), a tread band (7) applied at a radially external position to said belt structure (6) at a crown region;
wherein the carcass structure (2) comprises at least one carcass ply (3a, 3b);
wherein said at least one carcass ply (3a, 3b) comprises a plurality of reinforcing cords (12) disposed parallel to each other and at least partly covered with an elastomeric composition (R), at least some of said reinforcing cords (12) including at least one hybrid yarn (13);
wherein the hybrid yarn (13) comprises a plurality of filaments (14a, 15a) obtained from a first multi-filament yarn (14) of polyester and from a second multi-filament yarn (15) having a decay of the modulus with the temperature, measured between 20°C and 100°C, lower than 20%; each of said first multi-filament yarn (14) and second multi-filament yarn (15) comprising a plurality of individual filaments (14a, 15a); the individual filaments (14a) of said first multi-filament yarn (14) being at least partly mixed in proportions of at least 50% with the individual filaments (15a) of said second multi-filament yarn (15).

**13.** A tyre as claimed in claim 12, wherein the first multi-filament yarn (14) is made of fibres selected from the group: polyethylene terephthalate (PET), polyethylene naphthalate (PEN).

**14.** A tyre as claimed in claim 12 or 13, wherein the first multi-filament yarn (14) has a decay of the modulus with the temperature, measured between 20°C and 100°C and at a 2% elongation, higher than about 40%.

**15.** A tyre as claimed in anyone of claims 12 to 14, wherein the second multi-filament yarn (15) is made of fibres selected from the group comprising: aramide fibres, glass fibres, carbon fibres.

**16.** A tyre as claimed in anyone of claims 12 to 15, wherein the hybrid yarn (13) comprises about 50% by weight to about 90% by weight of the first multi-filament yarn.

**17.** A tyre as claimed in anyone of claims 12 to 16, wherein the hybrid yarn (13) comprises about 10% by weight to about 50% by weight of the second multi-filament yarn.

**18.** A tyre as claimed in anyone of claims 12 to 17, wherein the hybrid yarn (13) has a starting modulus at 20°C greater than about 1500 cN/Tex.

**19.** A tyre as claimed in anyone of claims 12 to 18, wherein the hybrid yarn (13) has a starting modulus at 20°C greater than about 2000 cN/Tex.

**20.** A tyre as claimed in anyone of claims 12 to 19, wherein the hybrid yarn (13) has a starting modulus at 20°C greater than about 2500 cN/Tex.

**21.** A tyre as claimed in anyone of claims 12 to 20, wherein the hybrid yarn (13) has a shrinkage, measured at 177°C, less than or equal to 4%.

**22.** A tyre as claimed in anyone of claims 12 to 21, wherein said tyre (1) is a high-performance tyre.

**Patentansprüche**

**1.** Verfahren zur Verbesserung des Hochgeschwindigkeitsverhaltens einer Karkassenstruktur in einem Reifen für Fahrzeugräder, wobei das Verfahren Folgendes umfasst:

Herstellen mindestens eines Hybridgarns (13), das eine Vielzahl von Filamenten (14a, 15a) umfasst, die aus einem ersten Multifilamentgarn (14) aus Polyester und einem zweiten Multifilamentgarn (15), das ein Abfallen des Moduls mit der Temperatur, gemessen zwischen 20°C und 100°C, um weniger als 20 % zeigt, erhalten werden;
wobei sowohl das erste Multifilamentgarn (14) als auch das zweite Multifilamentgarn (15) eine Vielzahl von Einzelfilamenten (14a, 15a) umfasst; wobei die Einzelfilamente (14a) des ersten Multifilamentgarns (14) zumindest teilweise in Anteilen von mindestens 50 % mit den Einzelfilamenten (15a) des zweiten Multifilamentgarns (15) gemischt werden;

Zusammenfügen einer Karkassenstruktur (2), die mindestens eine Karkasslage (3a, 3b) umfasst, die im Wesentlichen auf Korden (12) aufbaut, die das mindestens eine Hybridgarn (13) umfassen.

2. Verfahren nach Anspruch 1, wobei das erste Multifilamentgarn (14) aus Fasern hergestellt ist, die aus der folgenden Gruppe ausgewählt sind: Polyethylenterephthalat (PET), Polyethylennaphthalat (PEN).

3. Verfahren nach einem der vorhergehenden Ansprüche, wobei das erste Multifilamentgarn (14) ein Abfallen des Moduls mit der Temperatur, gemessen zwischen 20°C und 100°C und bei einer Dehnung um 2 %, um mehr als etwa 40 % zeigt.

4. Verfahren nach einem der vorhergehenden Ansprüche, wobei das zweite Multifilamentgarn (15) aus Fasern hergestellt ist, die aus der Gruppe ausgewählt sind, die Folgendes umfasst: Aramidfasern, Glasfasern, Carbonfasern.

5. Verfahren nach einem der vorhergehenden Ansprüche, wobei das Hybridgarn (13) etwa 50 Gew.-% bis etwa 90 Gew.-% von dem ersten Multifilamentgarn umfasst.

6. Verfahren nach einem der vorhergehenden Ansprüche, wobei das Hybridgarn (13) etwa 10 Gew.-% bis etwa 50 Gew.-% von dem zweiten Multifilamentgarn umfasst.

7. Verfahren nach einem der vorhergehenden Ansprüche, wobei das Hybridgarn (13) bei 20°C einen Anfangsmodul aufweist, der größer als etwa 1500 cN/tex ist.

8. Verfahren nach einem der vorhergehenden Ansprüche, wobei das Hybridgarn (13) bei 20°C einen Anfangsmodul aufweist, der größer als etwa 2000 cN/tex ist.

9. Verfahren nach einem der vorhergehenden Ansprüche, wobei das Hybridgarn (13) bei 20°C einen Anfangsmodul aufweist, der größer als etwa 2500 cN/tex ist.

10. Verfahren nach einem der vorhergehenden Ansprüche, wobei das Hybridgarn (13) eine Schrumpfung aufweist, die, gemessen bei 177°C, kleiner gleich 4 % ist.

11. Verfahren nach einem der vorhergehenden Ansprüche, wobei das Hybridgarn (13) hergestellt wird durch:

- Zuführen des ersten Multifilamentgarns (14) einer Luftdüsenvorrichtung (17) mit einer ersten Zuführgeschwindigkeit (CS1);
- Zuführen des zweiten Multifilamentgarns (15) einer Luftdüsenvorrichtung (17) mit einer zweiten Zuführgeschwindigkeit (CS2);
wobei die erste Zuführgeschwindigkeit (CS1) und die zweite Zuführgeschwindigkeit (CS2) im Wesentlichen gleich sind.

12. Reifen für Fahrzeugräder, der Folgendes umfasst:

eine Karkassenstruktur (2), eine Gürtelstruktur (6), die radial außen bezüglich der Karkassenstruktur (2) aufgebracht ist, ein Laufflächenband (7), das radial außen bezüglich der Gürtelstruktur (6) in einem Kronenbereich aufgebracht ist;
wobei die Karkassenstruktur (2) mindestens eine Karkasslage (3a, 3b) umfasst;
wobei die mindestens eine Karkasslage (3a, 3b) eine Vielzahl von verstärkenden Korden (12) umfasst, die parallel zueinander angeordnet und zumindest teilweise mit einer elastomeren Zusammensetzung (R) bedeckt sind, wobei mindestens einige der verstärkenden Korden (12) mindestens ein Hybridgarn (13) umfassen;
wobei das Hybridgarn (13) eine Vielzahl von Filamenten (14a, 15a) umfasst, die aus einem ersten Multifilamentgarn (14) aus Polyester und aus einem zweiten Multifilamentgarn (15), das ein Abfallen des Moduls mit der Temperatur, gemessen zwischen 20°C und 100°C, um weniger als 20 % zeigt, erhalten wurden; wobei sowohl das erste Multifilamentgarn (14) als auch das zweite Multifilamentgarn (15) eine Vielzahl von Einzelfilamenten (14a, 15a) umfasst; wobei die Einzelfilamente (14a) des ersten Multifilamentgarns (14) zumindest teilweise in Anteilen von mindestens 50 % mit den Einzelfilamenten (15a) des zweiten Multifilamentgarns (15) gemischt sind.

13. Reifen nach Anspruch 12, wobei das erste Multifilamentgarn (14) aus Fasern hergestellt ist, die aus der folgenden Gruppe ausgewählt sind: Polyethylenterephthalat (PET), Polyethylennaphthalat (PEN).

14. Reifen nach einem der Ansprüche 12 oder 13, wobei das erste Multifilamentgarn (14) ein Abfallen des Moduls mit der Temperatur, gemessen zwischen 20°C und 100°C und bei einer Dehnung um 2 %, um mehr als etwa 40 % zeigt.

15. Reifen nach einem der Ansprüche 12 bis 14, wobei das zweite Multifilamentgarn (15) aus Fasern hergestellt ist, die aus der Gruppe ausgewählt sind, die Folgendes umfasst: Aramidfasern, Glasfasern, Carbonfasern.

16. Reifen nach einem der Ansprüche 12 bis 15, wobei das Hybridgarn (13) etwa 50 Gew.-% bis etwa 90 Gew.-% von dem ersten Multifilamentgarn umfasst.

17. Reifen nach einem der Ansprüche 12 bis 16, wobei das Hybridgarn (13) etwa 10 Gew.-% bis etwa 50 Gew.-% von dem zweiten Multifilamentgarn umfasst.

18. Reifen nach einem der Ansprüche 12 bis 17, wobei das Hybridgarn (13) bei 20°C einen Anfangsmodul aufweist, der größer als etwa 1500 cN/tex ist.

19. Reifen nach einem der Ansprüche 12 bis 18, wobei das Hybridgarn (13) bei 20°C einen Anfangsmodul aufweist, der größer als etwa 2000 cN/tex ist.

20. Reifen nach einem der Ansprüche 12 bis 19, wobei das Hybridgarn (13) bei 20°C einen Anfangsmodul aufweist, der größer als etwa 2500 cN/tex ist.

21. Reifen nach einem der Ansprüche 12 bis 20, wobei das Hybridgarn (13) eine Schrumpfung aufweist, die, gemessen bei 177°C, kleiner gleich 4 % ist.

22. Reifen nach einem der Ansprüche 12 bis 21, wobei der Reifen (1) ein Hochgeschwindigkeitsreifen ist.

## Revendications

1. Procédé d'augmentation de la performance à vitesse élevée d'une structure de carcasse dans un pneu pour roues de véhicule, ledit procédé comportant le fait :

   - de préparer au moins un fil hybride (13) comprenant une pluralité de filaments (14a, 15a) obtenus à partir d'un premier fil multifilament (14) en polyester et d'un deuxième fil multifilament (15) ayant une dégradation du module avec la température, mesurée entre 20°C et 100°C, inférieure à 20% ; chacun desdits premier fil multifilament (14) et deuxième fil multifilament (15) comprenant une pluralité de filaments individuels (14a, 15a) ; les filaments individuels (14a) dudit premier fil multifilament (14) étant au moins partiellement mélangés dans des proportions d'au moins 50% avec les filaments individuels (15a) dudit deuxième fil multifilament (15) ;
   - d'assembler une structure de carcasse (2) comprenant au moins un pli de carcasse (3a, 3b) construit sensiblement sur des câbles (12) comprenant ledit au moins un fil hybride (13).

2. Procédé tel que revendiqué dans la revendication 1, dans lequel le premier fil multifilament (14) est réalisé en fibres choisies dans le groupe constitué : de polytéréphtalate d'éthylène (PET), de polynaphtalate d'éthylène (PEN).

3. Procédé tel que revendiqué dans l'une quelconque des revendications précédentes, dans lequel le premier fil multifilament (14) a une dégradation du module avec la température, mesurée entre 20°C et 100°C et à un allongement de 2%, supérieure à environ 40%.

4. Procédé tel que revendiqué dans l'une quelconque des revendications précédentes, dans lequel le deuxième fil multifilament (15) est réalisé en fibres choisies dans le groupe comprenant : des fibres d'aramide, des fibres de verre, des fibres de carbone.

5. Procédé tel que revendiqué dans l'une quelconque des revendications précédentes, dans lequel le fil hybride (13) comprend environ 50% en poids à environ 90% en poids du premier fil multifilament.

6. Procédé tel que revendiqué dans l'une quelconque des revendications précédentes, dans lequel le fil hybride (13) comprend environ 10% en poids à environ 50% en poids du deuxième fil multifilament.

7. Procédé tel que revendiqué dans l'une quelconque des revendications précédentes, dans lequel le fil hybride (13) a un module au démarrage à 20°C supérieur à environ 1500 cN/Tex.

8. Procédé tel que revendiqué dans l'une quelconque des revendications précédentes, dans lequel le fil hybride (13) a un module au démarrage à 20°C supérieur à environ 2000 cN/Tex.

9. Procédé tel que revendiqué dans l'une quelconque des revendications précédentes, dans lequel le fil hybride (13) a un module au démarrage à 20°C supérieur à environ 2500 cN/Tex.

10. Procédé tel que revendiqué dans l'une quelconque des revendications précédentes, dans lequel le fil hybride (13) a un retrait, mesuré à 177°C, inférieur ou égal à 4%.

11. Procédé tel que revendiqué dans l'une quelconque des revendications précédentes, dans lequel le fil hybride (13) est préparé :

- en introduisant le premier fil multifilament (14) dans un dispositif à jet d'air (17) à une première vitesse d'introduction (CS1) ;
- en introduisant le deuxième fil multifilament (15) dans le dispositif à jet d'air (17) à une deuxième vitesse d'introduction (CS2) ;
dans lequel la première vitesse d'introduction (CS1) et la deuxième vitesse d'introduction (CS2) sont sensiblement identiques.

12. Pneu pour roues de véhicule, comprenant :

une structure de carcasse (2), une structure de ceinture (6) appliquée à une position radialement externe par rapport à la structure de carcasse (2), une bande de roulement (7) appliquée à une position radialement externe par rapport à ladite structure de ceinture (6) au niveau d'une zone sommet ;
dans lequel la structure de carcasse (2) comprend au moins un pli de carcasse (3a, 3b) ;
dans lequel ledit au moins un pli de carcasse (3a, 3b) comprend une pluralité de câbles de renfort (12) disposés en parallèle les uns par rapport aux autres et au moins partiellement couverts d'une composition élastomère (D), au moins certains desdits câbles de renfort (12) comportant au moins un fil hybride (13) ;
dans lequel le fil hybride (13) comprend une pluralité de filaments (14a, 15a) obtenus à partir d'un premier fil multifilament (14) en polyester et d'un deuxième fil multifilament (15) ayant une dégradation du module avec la température, mesurée entre 20°C et 100°C, inférieure à 20% ; chacun desdits premier fil multifilament (14) et deuxième fil multifilament (15) comprenant une pluralité de filaments individuels (14a, 15a) ; les filaments individuels (14a) dudit premier fil multifilament (14) étant au moins partiellement mélangés dans des proportions d'au moins 50% avec les filaments individuels (15a) dudit deuxième fil multifilament (15).

13. Pneu tel que revendiqué dans la revendication 12, dans lequel le premier fil multifilament (14) est réalisé en fibres choisies dans le groupe constitué : de polytéréphtalate d'éthylène (PET), de polynaphtalate d'éthylène (PEN).

14. Pneu tel que revendiqué dans la revendication 12 ou 13, dans lequel le premier fil multifilament (14) a une dégradation du module avec la température, mesurée entre 20°C et 100°C et à un allongement de 2%, supérieure à environ 40%.

15. Pneu tel que revendiqué dans l'une quelconque des revendications 12 à 14, dans lequel le deuxième fil multifilament (15) est réalisé en fibres choisies dans le groupe comprenant : des fibres d'aramide, des fibres de verre, des fibres de carbone.

16. Pneu tel que revendiqué dans l'une quelconque des revendications 12 à 15, dans lequel le fil hybride (13) comprend environ 50% en poids à environ 90% en poids du premier fil multifilament.

17. Pneu tel que revendiqué dans l'une quelconque des revendications 12 à 16, dans lequel le fil hybride (13) comprend environ 10% en poids à environ 50% en poids du deuxième fil multifilament.

18. Pneu tel que revendiqué dans l'une quelconque des revendications 12 à 17, dans lequel le fil hybride (13) a un module au démarrage à 20°C supérieur à environ 1500 cN/Tex.

**19.** Pneu tel que revendiqué dans l'une quelconque des revendications 12 à 18, dans lequel le fil hybride (13) a un module au démarrage à 20°C supérieur à environ 2000 cN/Tex.

**20.** Pneu tel que revendiqué dans l'une quelconque des revendications 12 à 19, dans lequel le fil hybride (13) a un module au démarrage à 20°C supérieur à environ 2500 cN/Tex.

**21.** Pneu tel que revendiqué dans l'une quelconque des revendications 12 à 20, dans lequel le fil hybride (13) a un retrait, mesuré à 177°C, inférieur ou égal à 4%.

**22.** Pneu tel que revendiqué dans l'une quelconque des revendications 12 à 21, dans lequel ledit pneu (1) est un pneu à haute performance.

EP 2 516 178 B1

# FIG 1

16

# FIG 5

# FIG 2

# FIG 2a

FIG 3

EP 2 516 178 B1

FIG 4a

FIG 4b

FIG 6

Legend:
- B1-Kevlar 440
- B2-PET 1670
- A1-(Ar 50%)
- A2-(Ar 25%)
- A3-(Ar 20%)

Y-axis: Δ Mm(%)

X-axis: T (°C)

FIG 7

- AR+PET(37%) 1840x2 405x405
- AR+PET(37%) 1840x2 305x305
- AR+PET(20%) 2130x2 450x450
- Ry 1840x2 (480x480) [dry]
- Ry 1840x2 (480x480) [humid]
- Ry 1220x2 (550x550) [dry]
- Ry 1220x2 (550x550) [humid]

EP 2 516 178 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090139626 A1
- WO 2009052844 A
- EP 1745945 A
- EP 535969 A
- US 4155394 A
- EP 206522O A

**Non-patent literature cited in the description**

- **DIVISION BY DR. CHRISTIAN NORHAUSEN.** 161st Spring Technical Meeting. Condenka GmbH, 29 April 2002